# EUROPEAN PATENT SPECIFICATION

(11) **EP 3 470 614 B1**
(45) Date of publication and mention of the grant of the patent: **09.06.2021**
(21) Application number: 18460061.7
(22) Date of filing: 09.10.2018
(51) Int. Cl.: A47H 3/06, E06B 9/324, F16G 11/10

(54) **A CORD - BLOCKING ELEMENT**
SEILKLEMME
ÉLÉMENT POUR LE BLOCAGE DE CORDON

(30) Priority: 13.10.2017 PL 42315617
(43) Date of publication of application: 17.04.2019
(73) Proprietor: Maciej, Malejka, 95-083 Lutomiersk (PL)
(72) Inventor: Maciej, Malejka, 95-083 Lutomiersk (PL)

(56) References cited:
- WO-A1-2005/012036
- US-A- 5 519 921
- US-A1- 2009 282 653
- US-A1- 2016 066 654
- US-B1- 6 571 854

## Description

The subject matter of the invention, as set out in claim 1, is an element, needed to block a cord or string, particularly a cord of a roller blind, where there is no need to have access even to a single end of the cord.

There are some solutions regarding the way of placing blocking systems on a flexible cord, including common types of knots. In some of them, you do not have to have access to cord ends while tying.

Patent EP 2112017A1, pertaining to a cushioning element of a car seat, presents a blocking system, containing blocking elements, fixed directly on the cord. The blocking element consists of radiantly parted quarters of a cylinder, which make up many series of bumps (prominences). A cord is placed between the bumps and then pushed into narrowing grooves with a cap, which is pulled from the top and coordinated with the blocking element. This solution does not require cord ends while tying. However, like in the case of knots, a sufficient, so huge amount of cord is needed. It remains inside the blocking system, which prevents its proper distribution.

Patent US 5012559A presents a device for tensing cords, rope and reducing slack in the rope. It is used for ropes which have been fixed with knots, clips, grips or other solutions between two fixed ends. The device is made of wire or stamped from a flat metal plate. It is one-piece fixed element, where one end of the main part of the body contains a hook. The hook prevents a reverse rotation while the cord is being tensed. The other end of the body contains a rectangular shaped open loop for threading a cord and turning it around the main part of body of the device, needed for tightening the rope. By turning the tightening device for the rope clockwise and in the plane parallel to the rope, we make it wrap around itself. This lengthens the path of the rope and applies tension to the rope at each rotation of the device. The above solution can be used as a blockage fixed on the rope. However, its application is limited only to a tensed rope.

Patent US 20100058561A1 presents a rope grip slip-knot device in the shape of elipsoid. A cord passes through narrower ends of the elipsoid. Along its smallest circumference, the elipsoid is divided into two halves. Each of them has an oblique hole through which the cord passes. Both the ellipsoid halves are joined rotatably with the use of additional elements. A reciprocal rotation of the halves traps the rope inside the oblique holes. A foldable structure allows for an assembly on the rope without having access to its ends. The blockage is effective on a tensed and loose rope and it does not shorten it while blocking. However, this solution is highly complicated in terms of its construction and difficult to assemble. Besides, due to its big size, it cannot be used for thinner ropes, e.g. 0.5 - 3 mm in diameter.

Patent PL 57570 presents a rope grip, containing a sleeve with hardened clip edges in it. The mechanism of the clip involves self-locking of the wedges, adhering to the cord under the influence of external load and due to transferring of friction force onto the rope grip, induced by this load.

An invention, presented in patent PL 192404**,** is a precise, eccentric rope grip, particularly for small-diameter metal ropes. It contains an shaft, fixed in the aperture of the grip body. On the circumference of the shaft, there is an eccentrically engraved groove, whose radius corresponds to the radius of the cross section of the rope. The shaft with the eccentric groove for a rope can make a rotation and move along its own axis. This active element of the mechanism can be turned in any direction and causes frictional coupling. The grip body has a cylindrical aperture whose diameter corresponds to the diameter of the shaft with the eccentric groove as well as "input" and "output" through holes of the rope. The output through hole of the rope in the cylindrical aperture area of the shaft is properly deepened. This deepening allows for elastic bending of the rope under impact of the shaft and pressing the rope to the walls of the shaft and the wall of the deepened body. It results in forming a sort of ring which precisely encloses the rope along its circumference. As a consequence, the rope is fixed.

Patent EP/PL 2616709 presents improved solutions for clamping elements and clamping devices, used for fixing long elements, such as: cables, cords, ropes, etc. The author invented a clamping element in the form of elongated wedge, having an engaging area, containing serration. The serrations extend one after another along the length of the engaging surface and each serration extends laterally across the engaging surface. They increase adherence to the cable or rope. The engaging surface may have an engaging length which is between approximately three fifths and approximately three quarters of the length of the clamping member. The clamping element can be a part of a bigger structure, clamping elongate elements.

Patent US 5 519 921 A (1996-05-28) presents a cleat device for tightening a rope, comprised of a body with grooves, where the body has at least three arms with grooves carved on them, located in a line and alternately. There are spaces between bottom parts of the alternate grooves. This invention relates to rope cleats, mooring cleats and similar securing devices employed in material tie downs and the like. It effectively blocks a rope, whose one end is securely fixed to a different object and the rope is tensed.

In the presented patents, none of the systems is a simple or compact self-braking blockage which could be easily assembled on a cord and which could firmly block the cord, particularly when there is no access to its ends. Besides, due to a big size of the patented devices, they cannot be installed on thin cords of e.g. 0.5 - 3 mm in diameter.

The core of the invention, as set out in claim 1, is a cord-blocking element used in a roller blind, composed of: a body containing the upper surface, the lower surface, where the body has at least three parallel arms with spaces in-between and the spaces have a certain width, and the grooves are aligned and located alternately on the upper or lower parts of the arms, the grooves have bottom parts, **is characterized in that,** the width of the grooves is equal to the width of the spaces between the arms, and the width of spaces between the bottom parts of the grooves ranges from zero to two-fold width of the grooves, and the width of the grooves is smaller than the diameter of the cord to be blocked.

In an embodiment, the differences in the width of particular grooves and spaces between the arms are ±20%. In order to insert a cord more easily, preferably edges of the grooves are chamfered or rounded.

Preferably, the part of the body opposite the arms is finished with an element in the shape of letter A.

Preferably, the part of the body opposite the arms and one of the arms are finished with hooks.

Preferably, the part of the body opposite the arms is finished with a clip and one of the arms is finished with a hook.

Preferably, the part of the body opposite the arms is finished with a clip and one of the arms is elongated and has a hole.

Preferably, the part of the body opposite the arms is finished with a flattened table.

The new solution for the blocking element, herein disclosed, can be of a small size as it is one-piece and its construction is simple. Thus, it can be used particularly with thin cords in roller blinds. Access to cord ends is not required while installing the blocking element. One does not have to use huge amounts of cord to provide effective blockage. Moreover, the blockage is equally effective when the cord is loose or tensed. The blocking element can be also easily disassembled. The structure of the blocking element can be tailored for a user's need. As it has been presented, the body can be finished with a decorative element, e.g. in the shape of letter A, or a flat plate. The body and one of arms can be also finished with hooks or clips, or one arm can be elongated and can have a hole. All these proposed options allow for many applications of the blocking element, particularly when some elements have to be firmly fixed to flexible and thin cords or strings. The cord-blocking element can be a part of other element, used for making various bigger systems for blocking cords.

Embodiments will be more clearly understood from the following description, given by way of example only with no limit to the possible applications of the blocking element, and with reference to the accompanying drawings, in which:
Fig. 1 (a - d) - presents the cord-blocking element in the top and side views and in two sections, where:
   **Fig. 1a** - presents the cord-blocking element in the top view;
   **Fig. 1b** - presents grooves in the side view;
   **Fig. 1c** - presents the cord-blocking element in the transverse section - B-B;
   **Fig. Id** - presents the cord-blocking element in the longitudinal section - A-A;
**Fig. 2** **(a - b)** - where:
   **Fig. 2a** - presents the cord-blocking element in the top view with blocked cord L;
   **Fig. 2b** - presents the cord-blocking element with cord L in the longitudinal section A-A;
**Fig. 3** **(a - e)** - presents the cord-blocking element in the perspective view ; Figures 3a - 3e present subsequent stages of inserting cord L into the blocking element;
**Fig. 4** - presents the cord-blocking element in the perspective view, in which edges above top parts of the grooves are chamfered;
**Fig. 5** - presents the cord-blocking element in the perspective view, in which edges above top parts of the grooves are rounded.
   The following figures present the cord-blocking element in various shape options (various modifications), according to the proposed invention; according to embodiments of the invention, the end of the body of the blocking element as well as one of its arms can have various shapes, where:
**Fig. 6** - presents the cord-blocking element in the perspective view, in which the body is finished with a decorative element in the shape of letter A;
**Fig. 7** - presents the cord-blocking element in the perspective view, in which the body and one of the arms are finished with hooks;
**Fig. 8** - presents the cord-blocking element in the perspective view, in which the body is finished with a clip and one of the arms is finished with a hook;
**Fig. 9** - presents the cord-blocking element in the perspective view, in which the body is finished with a clip and one of arms is elongated and has a hole;
**Fig. 10** - presents the cord-blocking element in the perspective view, in which the body is finished with a flat table.

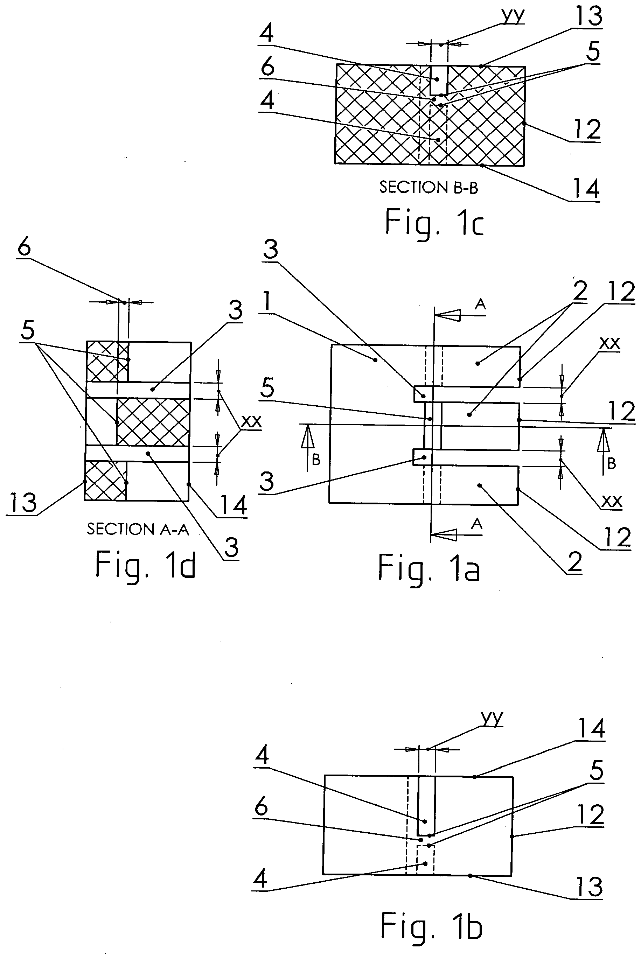

As Figure 1 (a - d) presents, the cord-blocking element according to the invention, contains a body (1) which has the upper surface (13), lower surface (14) and lateral surface (12). On the lateral surface (12), there are two parallel grooves which connect the upper surface (13) of the body with the lower surface (14) and have spaces (3) between three arms (2). The spaces (3) have a certain width (xx) and on the arms (2) there are grooves (4) located in lines. The grooves (4) are located alternately on the upper surface (13) or the lower surface (14) of the arms (2) and their width (yy) is equal to the width (xx) of the spaces (3) between the arms (2). Bottom parts (5) of the alternating grooves (4) are located in spaces (6), ranging from zero to two-fold width (yy) of the alternate grooves (4), and the width (yy) of the grooves (4) is configured to be smaller than the diameter of the cord to be blocked. The differences in the width of particular grooves (4) and spaces (3) between the arms (2) are ±20%.

According to the invention, there is a relationship between the spaces (3) in the arms (2) and the width of the grooves (4) which is equal to the spaces (3). Such arrangement is essential to provide effective functioning of the blocking element since the diameter of the blocked cord L is bigger than the width of the grooves (4) and spaces (3) between the arms (2). Cord L, while being assembled in the said spaces (3) between the arms (2) and grooves (4) of the blocking element, gets partly deformed, i.e. its diameter becomes smaller. It gets into the groove (4) and becomes blocked.

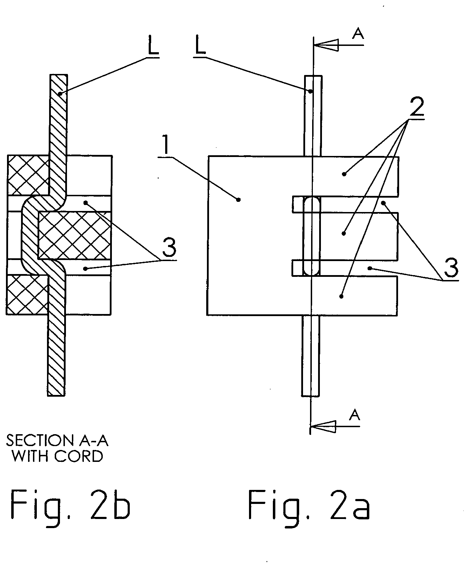

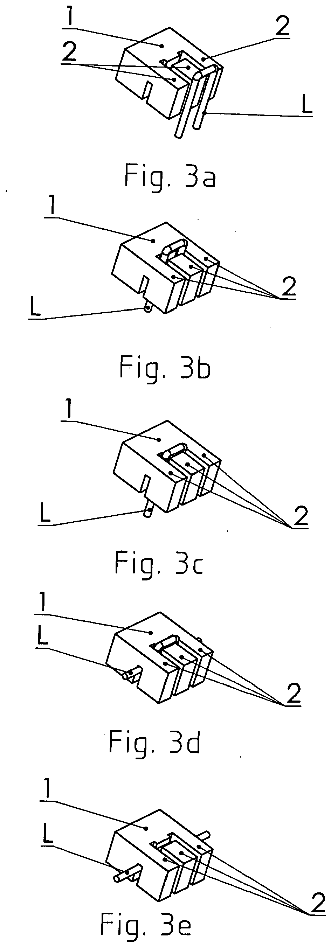

Fig. 2 (a - b) presents the top view of the blocking element with blocked cord L and the longitudinal section of the cord. Fig. 3 (a - c) presents subsequent stages of blocking the cord, which involve inserting cord L into the spaces (3) between the arms (2), above the alternate grooves (4) and pulling both ends of the cord. When pulled, the cord gets thinner and automatically gets inserted into the grooves (4), whose width is smaller than the cord diameter.

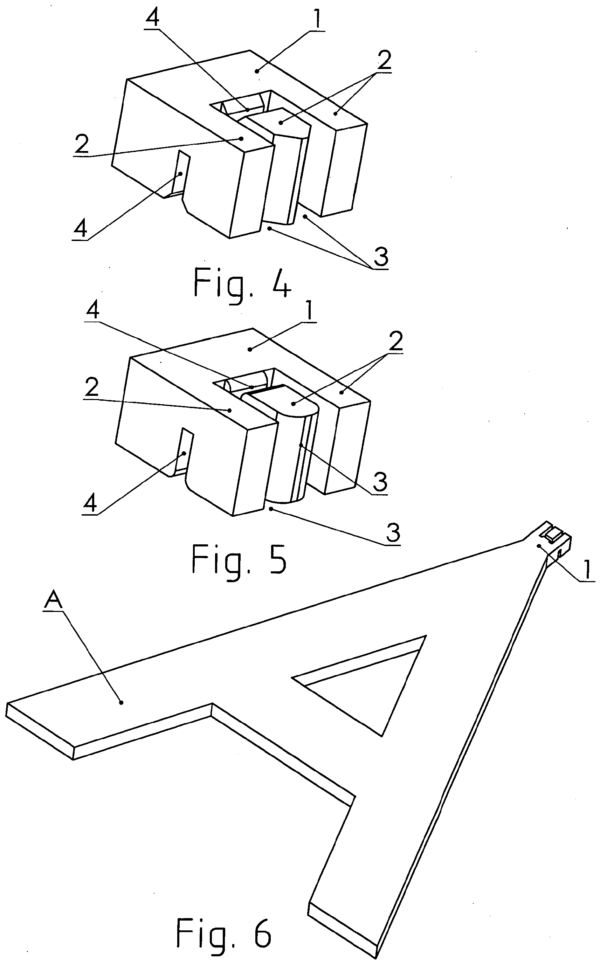

Chamfered Fig. 4 or rounded Fig. 5 edges above the bottom of the grooves (4) enable the cord to get itself into the grooves.

In the alternative implementation of the blocking element according to the invention shown on Fig. 6, the part of the body (1) opposite the arms (2) is finished with a decorative element, e.g. in the shape of letter A, and it can be hung on a cord.

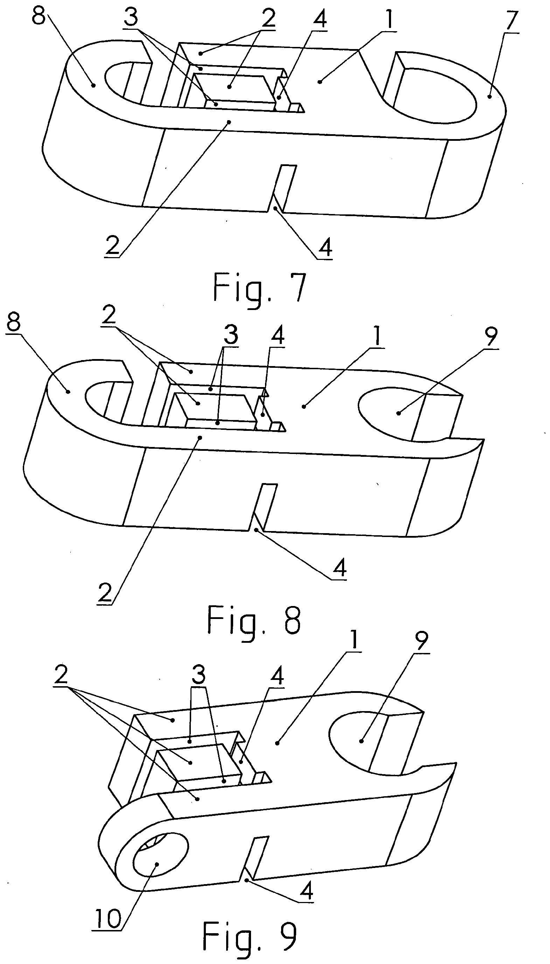

In the next implementation of the blocking element according to the invention shows on Fig. 7, the part of the body (1) opposite the arms (2) is finished with a hook (7), and one of the arms (2) is finished with a hook (8).

In the next implementation of the blocking element according to the invention shows on Fig. 8, the part of the body (1) opposite the arms (2) is finished with a clip (9) and one of the arms (2) is finished with a hook (8).

In the next implementation of the blocking element according to the invention shows on Fig. 9, the part of the body (1) opposite the arms (2) is finished with a clip (9) and one of the arms (2) is elongated and has a hole (10).

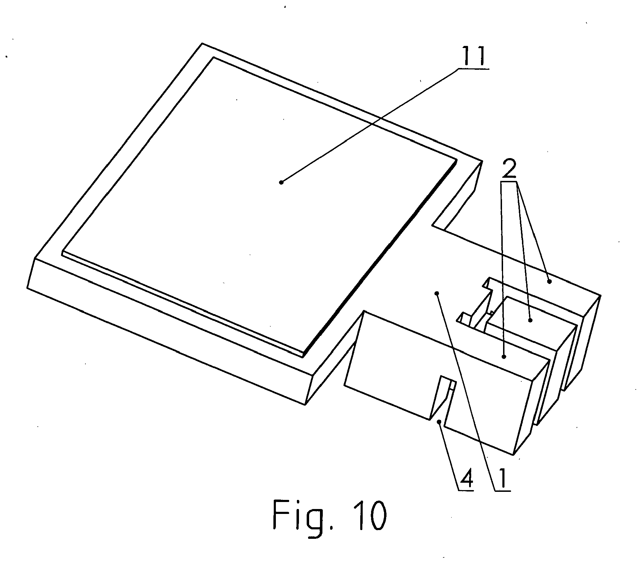

In the next implementation of the blocking element according to the invention shows on Fig. 10, the part of the body (1) opposite the arms (2) is finished with a flat table (11).

## Claims

1. A cord-blocking element, suitable for a cord of a roller blind, comprising: a body (1), the body having an upper surface (13), a lower surface (14), the body having at least three parallel arms (2) with spaces (3) between them, wherein the spaces (3) have a certain width (xx), wherein on the at least three arms grooves (4) are carved, the grooves being aligned and being located alternately on the upper surface (13) or on the lower surface (14) of the arms, the grooves having bottom parts (5), **characterized in that** the grooves (4) have a width (yy) equal to the width (xx) of the spaces (3) between the arms wherein the width of the spaces (6) between the bottom parts (5) of the grooves ranges between zero and two-fold the width (yy) of the grooves (4), wherein the width (yy) of the grooves (4) is configured to be smaller than the diameter of the cord to be blocked.

2. The element according to claim 1, **characterized in that,** the differences in the width of particular grooves **(4)** and spaces **(3)** are ±20%.

3. The element according to claim 1, **characterized in that,** the grooves **(4)** have chamfered edges.

4. The element according to claim 1, **characterized in that,** the grooves **(4)** have rounded edges.

5. The element according to any of claims 1 - 4, **characterized in that,** the part of the body **(1)** opposite the arms **(2)** is finished with an element in the shape of letter A.

6. The element according to any of claims 1 - 4, **characterized in that,** the part of the body **(1)** opposite the arms **(2)** is finished with a hook (7), and one of the arms **(2)** is finished with a hook **(8).**

7. The element according to any of claims 1 - 4, **characterized in that,** the part of the body **(1)** opposite the arms **(2)** is finished with a clip **(9),** and one of the arms **(2)** is finished with a hook **(8).**

8. The element according to any of claims 1 - 4, **characterized in that,** the part of the body **(1)** opposite the arms **(2)** is finished with a clip **(9),** and one of arms **(2)** is elongated and has a hole **(10).**

9. The element according to any of claims 1 - 4, **characterized in that,** the part of the body **(1)** opposite the arms **(2)** is finished with a flat table **(11).**

## Patentansprüche

1. Eine Seilklemme, die für ein Rollladenseil geeignet ist, einschließlich: Gehäuse (1), mit der oberen Fläche (13), der unteren Fläche (14), wo das Gehäuse mindestens drei parallele Ausleger (2) mit Abständen (3) zwischen ihnen hat, und die Abstände (3) zwischen den Auslegern eine bestimmte Breite (xx) haben, wo auf mindestens drei Auslegern Kanäle (4) reihenweise untergebracht sind, wobei sich die Kanäle abwechselnd auf der oberen Fläche (13) oder auf der unteren Fläche (14) der Ausleger befinden, die Kanäle besitzen untere Teile (5), **charakteristisch dadurch, dass** die Kanäle (4) die Breite (yy) haben, die der Breite (xx) der Abstände (3) zwischen den Auslegern gleich ist, und die Breite der Abstände (6) zwischen den unteren Teilen (5) der Kanäle im Bereich von Null bis zur zweimaligen Breite (yy) der Kanäle (4) liegt, wobei die Breite (yy) der Kanäle (4) so konfiguriert ist, damit sie kleiner ist als der Durchmesser des Seils, das blockiert werden soll.

2. Element gemäß Vorbehalt 1, **charakteristisch dadurch,** dass die Breitenunterschiede der einzelnen Kanäle 4 und der Abstände 3 in den Grenzen von ±20% liegen.

3. Element gemäß Vorbehalt 1, **charakteristisch dadurch,** dass die Kanäle (4) abgeschrägte Kanten haben.

4. Element gemäß Vorbehalt 1, **charakteristisch dadurch,** dass die Kanäle (4) abgerundete Kanten haben.

5. Element gemäß irgendwelchem von Vorbehalten von 1 bis 4, **charakteristisch dadurch,** dass das Gehäuse (1) in dem Teil, der den Auslegern (2) gegenüber liegt, das Ende in Form der A-Buchstabe hat.

6. Element gemäß irgendwelchem von Vorbehalten von 1 bis 4, **charakteristisch dadurch,** dass das Gehäuse (1) in dem Teil, der den Auslegern (2) gegenüber liegt, das Ende in Form eines Hakens (8) hat, und einer der Ausleger (2) das Ende in Form eines Hakens (8) hat.

7. Element gemäß irgendwelchem von Vorbehalten von 1 bis 4, **charakteristisch dadurch,** dass das Gehäuse (1) in dem Teil, der den Auslegern (2) gegenüber liegt, das Ende in Form eines Schnappschlosses (9) hat, und einer der Ausleger (2) das Ende in Form eines Hakens (8) hat.

8. Element gemäß irgendwelchem von Vorbehalten von 1 bis 4, **charakteristisch dadurch,** dass das Gehäuse (1) in dem Teil, der den Auslegern (2) gegenüber liegt, das Ende in Form eines Schnappschlosses (9) hat, und einer der Ausleger (2) verlängert ist und ein Loch (10) hat.

9. Element gemäß irgendwelchem von Vorbehalten von 1 bis 4, **charakteristisch dadurch,** dass das Gehäuse (1) in dem Teil, der den Auslegern (2) gegenüber liegt, das Ende in Form eines abgeflachten Plättchens (11) hat.

## Revendications

1. Elément de verrouillage de câble approprié pour un câble de store enrouleur, comprenant: un corps (1) ayant une surface supérieure (13), une surface inférieure (14), le corps ayant au moins trois bras parallèles (2) avec des espaces (3) entre eux .et les espaces (3) entre les bras ont une largeur prédéterminée (xx), avec des canaux (4) disposés en série sur au moins trois bras, les canaux positionnés alternativement sur la surface supérieure (13) ou sur la surface inférieure (14 ) des bras, les canaux ont des parties inférieures (5), **caractérisé en ce que** les canaux (4) ont une largeur (yy) égale à la largeur (xx) des espaces (3) entre les bras, et à la largeur dès les espaces (6) entre les parties inférieures (5) des canaux vont de zéro à deux fois la largeur (yy) des canaux (4), la largeur (yy) des canaux (4) étant configurée pour être plus petite que la diamètre du câble à bloquer.

2. Un élément selon la revendication 1, **caractérisé en ce que** les différences de largeur des canaux individuels 4 et des espaces 3 sont dans les limites ± 20%.

3. Un élément selon la revendication 1, **caractérisé en ce que** les canaux (4) ont des bords biseautés.

4. Un élément selon la revendication 1, **caractérisé en ce que** les canaux (4) ont des bords arrondis.

5. Elément selon l'une quelconque des revendications de 1 à 4, **caractérisé en ce que** le corps (1) présente une extrémité en forme de la lettre A dans la partie opposée aux bras (2).

6. Elément selon l'une quelconque des revendications de 1 à 4, **caractérisé en ce que** le corps (1) dans la partie opposée aux bras (2) présente une extrémité en forme de cran (7), et l'un des bras (2) a une extrémité en forme de cliquet (8).

7. Elément selon l'une quelconque des revendications de 1 à 4, **caractérisé en ce que** le corps (1) dans la partie opposée aux bras (2) présente une extrémité en forme de loquet (7), et l'un des bras (2) a une extrémité en forme de cliquet (8).

8. Elément selon l'une quelconque des revendications de 1 à 4, **caractérisé en ce que** le corps (1) dans la partie opposée aux bras (2) présente une extrémité en forme de loquet (7), et l'un des bras (2) est allongé et possède un 'orifice.

9. Elément selon l'une quelconque des revendications de 1 à 4, **caractérisé en ce que** le corps (1) dans la partie opposée aux bras (2) présente une extrémité en forme de plaque aplatie.
